# EUROPEAN PATENT SPECIFICATION

(11) **EP 4 024 167 B1**
(45) Date of publication and mention of the grant of the patent: **03.06.2026**
(21) Application number: 20217730.9
(22) Date of filing: 30.12.2020
(51) Int. Cl.: G06F 3/01, G06F 1/00, H04M 1/72454

(54) **ELECTRONIC DEVICE, ELECTRONIC SYSTEM, AND SENSOR SETTING METHOD FOR AN ELECTRONIC DEVICE**
ELEKTRONISCHE VORRICHTUNG, ELEKTRONISCHES SYSTEM UND SENSOREINSTELLVERFAHREN FÜR EINE ELEKTRONISCHE VORRICHTUNG
DISPOSITIF ÉLECTRONIQUE, SYSTÈME ÉLECTRONIQUE, ET PROCÉDÉ DE RÉGLAGE DE CAPTEUR D'UN DISPOSITIF ÉLECTRONIQUE

(43) Date of publication of application: 06.07.2022
(73) Proprietor: Panasonic Intellectual Property Management Co., Ltd., Osaka-shi, Osaka 540-6207 (JP)
(72) Inventor: IKEDA, Kotaro, Osaka-shi, Osaka, 540-6207 (JP)
(74) Representative: Grünecker Patent- und Rechtsanwälte PartG mbB

(56) References cited:
- WO-A1-2016/120887
- US-A1- 2011 310 005
- US-A1- 2014 160 505

## Description

### TECHNICAL FIELD

The present disclosure relates to an electronic device configured to be installed in a given space, an electronic system, and a sensor setting method for an electronic device.

### BACKGROUND ART

Transportation means such as aircraft and trains are often equipped with display devices that are individually used by passengers and crew members. Transportation means have internal spaces where structures such as seats and walls exist. Such structures have a variety of shapes. Therefore, in order to be installed in conformity with a variety of surrounding structures, display devices are required to change, for example, their positions or orientations or how they are fixed to the surrounding structures.

In recent years, display devices may include proximity sensors for touch panel operations and user motion recognition, as disclosed in, for example, JP2014-036255A and JP2018-181351A.

Due to a shape of a structure in the space where a display device is installed, the structure may block detection of proximity sensors. This can cause the proximity sensors to operate incorrectly.

The present disclosure relates to an electronic device, an electronic system, and a sensor setting method for an electronic device, which is effective for maintaining a proper operation of a sensor of the electronic device when the electronic device is installed in a given space.

US 2011 0310005 A1 relates to proximity detection with infrared sensors on display devices. Two sensors on the front face of the display determine proximity of objects. Parameters like device orientation are mentioned that can be used to adjust a power level of the proximity sensors.

US 2014 160505 A1 relates to person detection. An apparatus that is to be placed in a power saving mode has a fixed position and is returned to normal mode when a person comes close to the apparatus. To avoid that the apparatus is always in normal mode when a person is always close to the apparatus but does not use the apparatus (e.g. has a desk next to the apparatus) a detection area can be manually set such that the apparatus only returns to normal mode when a person is detected in the manually set area.

WO 2016 120887 A1 relates to providing autonomous movement features like automatic retractable telescopic legs and variable feet to smart phones and using smart phone sensors for determining the orientation of the phone and user presence around the phone.

### SUMMARY

The invention is defined by the independent claims. Preferred embodiments are disclosed in the dependent claims.

### BRIEF DESCRIPTION OF THE DRAWINGS

FIG. 1 is a plan view of a display device.
FIG. 2 is a plan view showing an installation state of the display device.
FIG. 3 is a plan view showing another installation state of the display device.
FIG. 4A is a side view showing a partial cross section of an installation state of the display device.
FIG. 4B is a side view showing a partial cross section of another installation state of the display device.
FIG. 5 schematically shows a configuration of an electronic system according to Embodiment 1.
FIG. 6 shows a configuration of a display device according to Embodiment 1.
FIG. 7 shows a configuration of a server according to Embodiment 1.
FIG. 8 is a flowchart showing an operation of the display device according to Embodiment 1.
FIG. 9 is a flowchart showing an operation of the server according to Embodiment 1.
FIG. 10A shows sensor setting information according to Embodiment 1.
FIG. 10B shows display device installation information according to Embodiment 1

### DETAILED DESCRIPTION

Hereinafter, embodiments will be described in detail, with reference to the drawings when appropriate. Any explanations deemed unnecessary may be omitted. For example, detailed descriptions of well-known aspects or duplicate descriptions of substantially identical components may be omitted from this disclosure. This is to avoid unnecessary redundant description in the following and to facilitate understanding by those skilled in the art.

**It** is to be noted that the attached drawings and the following description are provided to enable those skilled in the art to fully understand the present disclosure, and they are not intended to limit the claimed subject matter.

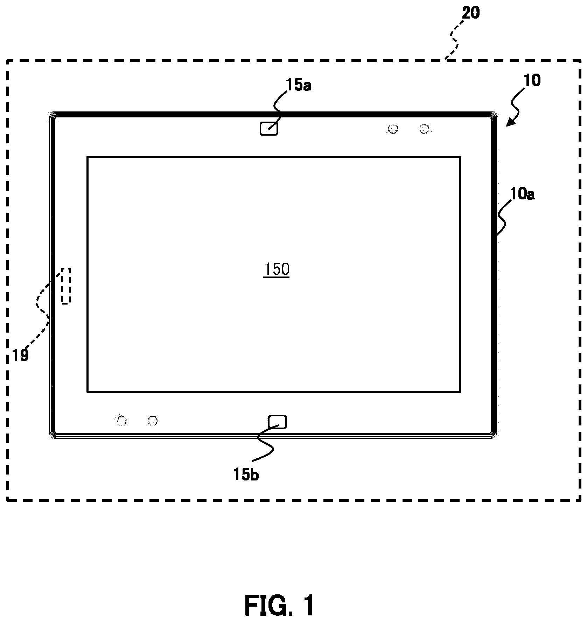

FIG. 1 shows an example of an installation state of a display device 10. The display device 10 is covered with a surface member 20 such as wallpaper. Only information displayed on the screen 150 is visible through the surface member 20. The display device 10 installed in this manner can allow only information to be brought to a surface of the surface member 20 so that a user feels no presence of the display device 10 and its screen 150. This improves the design of a space where the display device 10 is installed.

The display device 10 includes proximity sensors 15a and 15b arranged vertically. The proximity sensors 15a and 15b detect, for example, if a user's hand has come close to the screen 150 through the surface member 20. In response to this detection, a user's input operation is determined and an input process is executed.

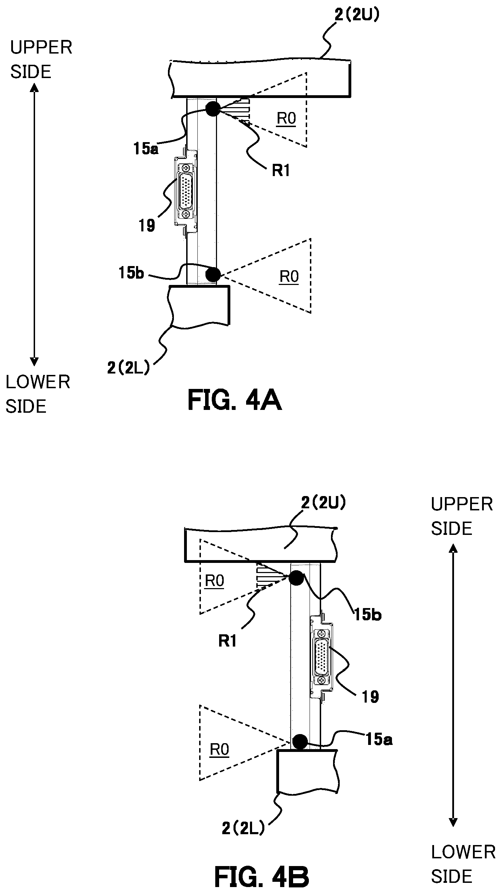

When the display device 10 is installed in a given space, the installation orientation of the display device 10 is changed depending on a structure around the display device. For example, as illustrated in FIGS. 4A and 4B, a pair of display devices 10 arranged on the right and left sides are installed in a structure having an upper wall 2U protruding further than a lower wall 2L.

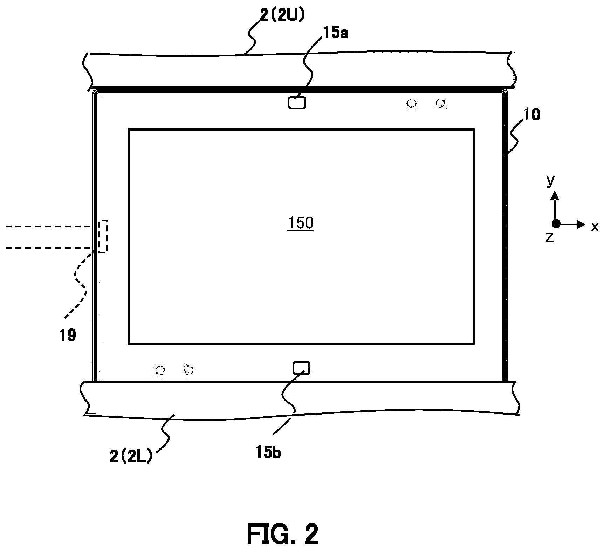

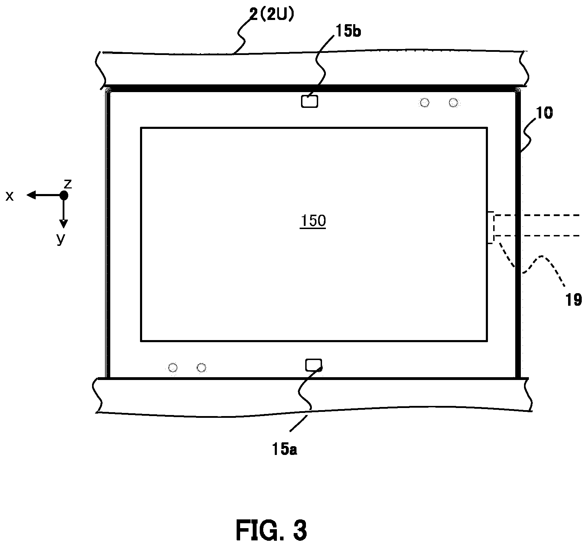

The display device 10 on the left side is installed as illustrated in FIGS. 2 and 4A such that a connection terminal 19 is disposed on the left side where a power supply and a communication line are disposed. In this case, the proximity sensor 15a is disposed on the upper side, and the proximity sensor 15b is disposed on the lower side. Hereinafter, this installation orientation is referred to as a first orientation. In this case, as illustrated in FIG. 4A, the overhanging upper wall 2U partially blocks a detection range R0 of the upper proximity sensor 15a. The display device 10 on the right side is installed as illustrated in FIGS. 3 and 4B such that the connection terminal 19 is disposed on the right side where the power supply and the communication line are disposed. In this case, the proximity sensor 15b is disposed on the upper side, and the proximity sensor 15a is disposed on the lower side. Hereinafter, this installation orientation is referred to as a second orientation. In this case, as illustrated in FIG. 4B, the overhanging upper wall 2U partially blocks a detection range R0 of the upper proximity sensor 15b.

As a result, the proximity sensors 15a and 15b may not be able to properly detect a user's hand or the like coming closer. As one option to avoid this, the detection range of the proximity sensor 15a or 15b in which the detection range R0 is partially blocked may be reduced. However, the proximity sensor 15a or 15b in which the detection range R0 is partially blocked differs depending on the installation orientation of the display device 10.

In the present embodiment, the display device 10 is capable of maintaining a proper operation of a proximity sensor even if the installation orientation of the display device 10 is changed. Hereinafter, embodiments will be described with reference to the drawings as appropriate.

### 1. Embodiment 1

### 1-1. Configuration

### 1-1-1. Configuration of Electronic System

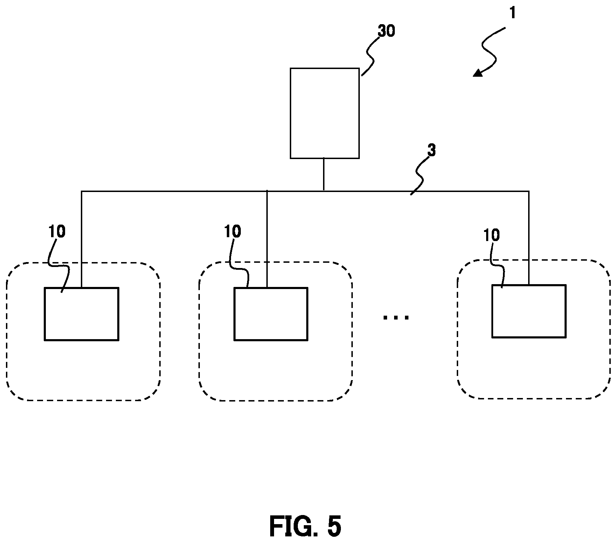

FIG. 5 schematically shows a configuration of an electronic system 1 according to Embodiment 1. The electronic system 1 is, for example, a network system installed and used in an aircraft. The electronic system 1 comprises a plurality of display devices 10 (an example of an electronic device) and a server 30. The display devices 10 are installed in structures such as walls or seats in spaces inside the aircraft. Each display device 10 connects to the server 30 by a wireless or wired network 3. A user such as a passenger or a crew member operates the display device 10 to display various information on the screen 150.

### 1-1-2. Configuration of Display Device

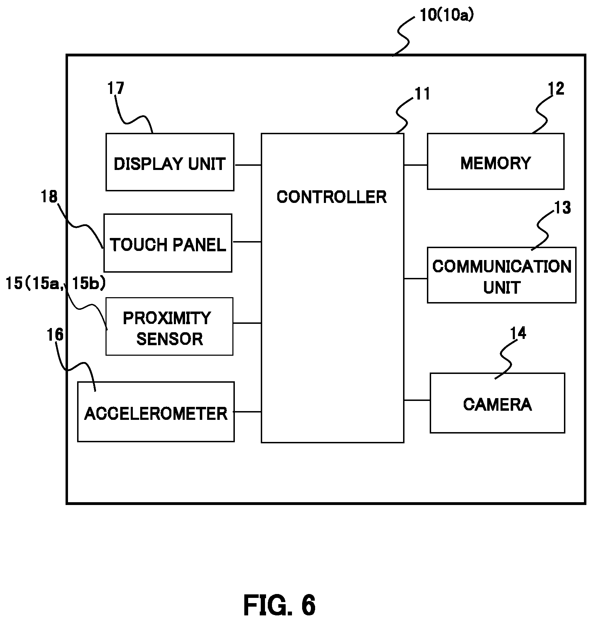

As illustrated in FIG. 6, the display device 10 includes a display main body 10a (FIG. 1). The display device 10 comprises a controller 11, a memory 12, a communication unit 13, a camera 14, a proximity sensor 15 (15a, 15b), an accelerometer 16, a display unit 17, and a touch panel 18.

The controller 11 functions as an arithmetic processor unit and a controlling unit, and controls the overall operation of the display device 10 according to computer programs. The controller 11 includes electronic circuitry such as a CPU or a microprocessor. As will be described later, the controller 11 adjusts sensitivity of the proximity sensor 15a or 15b to set a detection range of the proximity sensor in accordance with a request from the server 30. The controller 11 compares electric signals from the proximity sensors 15a and 15b with a predetermined determination threshold value to determine whether or not an object is close to the proximity sensor 15a or 15b. The determination threshold value is, for example, a threshold value set for signal intensity and/or a detection time of the signals detected by the proximity sensors 15a and 15b.

The memory 12 includes a memory such as a RAM or a ROM. The controller 11 reads computer programs stored in the ROM or other memory into the RAM and executes the computer programs to execute the functions of the display device 10.

The communication unit 13 includes, for example, a network interface such as a network card. The communication unit 13 connects to the network 3 (FIG. 5) by wire or wirelessly to transmit and receive data to and from the server 30 on the network 3.

The camera 14 includes a lens and an image sensor. The camera 14 captures an image of an area in front of the display main body 10a.

The proximity sensors 15a and 15b are arranged so that the detection ranges of the proximity sensors cover the area in front of the display main body 10a. The proximity sensors 15a and 15b detect if an object is in their proximity, that is, detect whether or not an object is within a predetermined distance from a front surface of the display main body 10a. The proximity sensors 15a and 15b are arranged on an upper side and a lower side of the display device 10 as illustrated in FIG.1.

The proximity sensors 15a and 15b are, for example, infrared proximity sensors. The proximity sensors 15a and 15b each include a light emitting element such as an LED that emits infrared rays and a light receiving element that converts received light into an electric signal. If an object (for example, a user's hand) exists in front of the display main body 10a, the controller 11 receives an electric signal converted from light reflected by the object. If the controller 11 detects the electric signal with the intensity equal to or higher than a predetermined value and detects such electric signal for more than a predetermined time, it is determined that the object exists within the predetermined distance. The controller 11 can adjust sensitivity of the proximity sensors 15a and 15b to set the detection ranges of the proximity sensors. Adjusting the sensitivity of the proximity sensors 15a and 15b includes, for example, adjusting an amplification degree of an amplifier that amplifies an electric signal from the light receiving element, or adjusting a light emitting output (for example, a parameter for intensity of infrared rays) of the light emitting element.

The proximity sensors 15a and 15b are used to detect if a user's hand is in their proximity and the position of the user's hand, according to which an input operation is performed. For example, in a state where the screen 150 (FIG. 1) of the display device 10 is OFF, the controller 11 may turn ON the screen 150 when having determined that a user's hand is in proximity based on the electric signal from the proximity sensor 15a or 15b. For example, as disclosed in JP2018-181351A, the controller 11 may determine a vertical or horizontal movement of a user's hand based on a time difference of the electric signal from the proximity sensor 15a or 15b to perform a process such as scrolling or page change on the screen 150.

The accelerometer 16 (an example of a state detection unit) is, for example, a three-axis type accelerometer. The accelerometer 16 may be a piezoresistive type or a capacitance type. The accelerometer 16 detects X, Y, and Z axis directions (including the direction of gravity). The controller 11 determines an installation orientation of the display device 10 (display device main body 10a) based on an electric signal from the accelerometer 16. For example, when the display device 10 is in the state illustrated in FIG. 2, the controller 11 determines that the display device 10 is installed in the first orientation. When the display device 10 is in the state illustrated in FIG. 3, the controller 11 determines that the display device 10 is installed in the second orientation.

The display unit 17 includes the screen 150 (FIG. 1) to output information in the form of a still image, a moving image, a text, or the like. The display unit 17 is, for example, a liquid crystal display device, an organic EL (Electro Luminescence) display device, or the like.

The touch panel 18 is layered on the display unit 17 to function as a touch screen. The touch panel 18 converts, for example, a pressure applied to a specific portion on the screen 150 or a change of capacitance generated in a specific portion of the display unit 17 into an electric input signal. The touch panel 18 then notifies the controller 11 of a location of the detected specific portion.

### 1-1-3. Configuration of Server

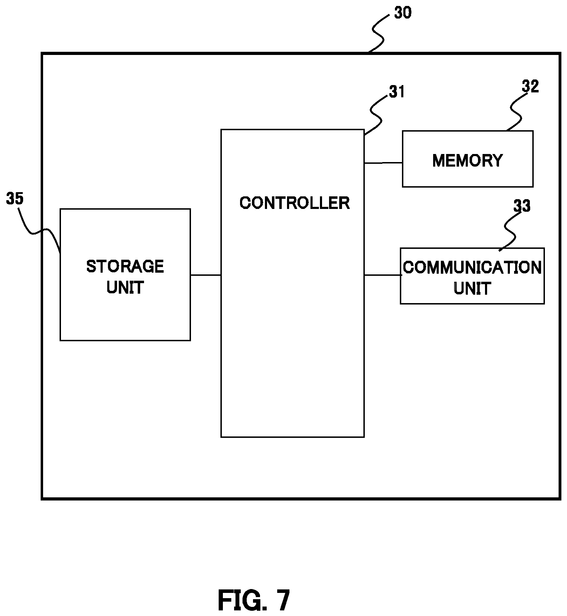

As illustrated in FIG. 7, the server 30 is a computer device including a controller 31, a memory 32, a communication unit 33, and a storage unit 35.

The controller 31 functions as an arithmetic processor unit and a controlling unit, and controls the overall operation of the server 30 according to computer programs. The controller 31 includes electronic circuitry such as a CPU or a microprocessor.

The memory 32 includes a memory such as a RAM or a ROM. The controller 31 reads computer programs stored in the ROM or other memory into the RAM and executes the computer programs to execute the functions of the server 30.

The communication unit 33 includes, for example, a network interface such as a network card. The communication unit 33 connects to the network 3 (FIG. 5) by wire or wirelessly to transmit and receive data to and from a plurality of display devices 10 on the network 3.

The storage unit 35 includes a magnetic disk or semiconductor memory. The storage unit 35 stores application programs to be executed by the server 30 and various data including content data to be distributed to the display devices 10. The storage unit 35 may be a data server or a content server, which is separate from the server 30 and connects to the server 30.

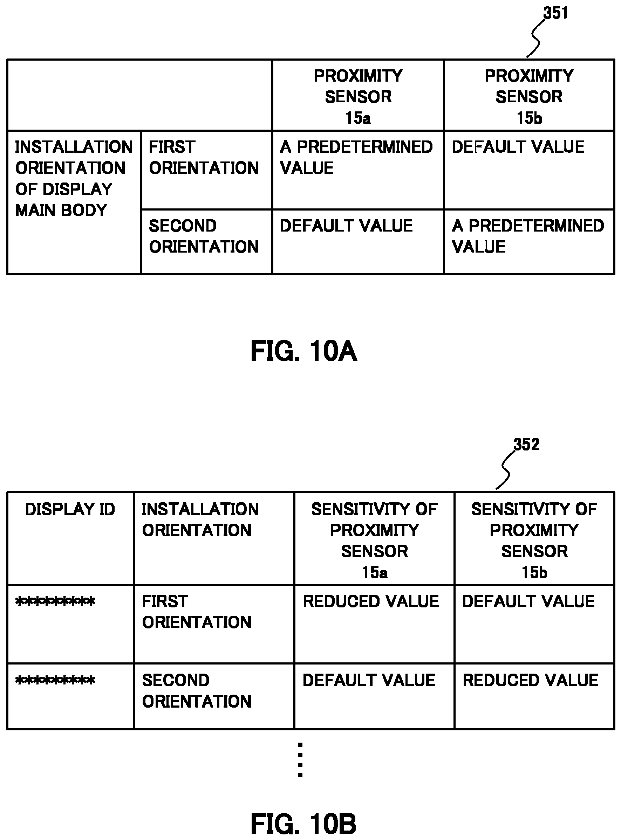

The storage unit 35 stores sensor setting information 351 illustrated in FIG. 10A and display device installation information 352 illustrated in FIG. 10B. The sensor setting information 351 stores set values (values of electric signals from the light receiving element, output values of the light emitting element, etc.) for adjusting the sensitivities of the proximity sensors 15a and 15b in accordance with an installation orientation of the display device 10. These set values are input and stored in advance in consideration of a degree to which an installation condition of the display device 10 such as a wall overhang, a wall dent, etc. affects the detection ranges of the proximity sensors 15a and 15b. As will be described later, the proximity sensor 15a or 15b reduces its sensitivity to a predetermined value according to an installation orientation of the display device 10. The display device installation information 352 holds an installation orientation of each display device 10 and a set value of the sensitivity of the proximity sensor 15a or 15b. When the display device 10 is installed, installation information for the display device 10 is added to the display device installation information 352.

### 1-2. Operation

An example will be described in a case where an installation condition is as illustrated in FIGS. 4A and 4B. Here, the operation of the electronic system 1 will be described when the display device 10 is installed in a structure where the upper wall 2U protrudes further than the lower wall 2L.

In the electronic system 1, the server 30 acquires information indicating an installation orientation of each display device 10, and lowers sensitivity of either the proximity sensor 15a or the proximity sensor 15b according to the installation orientation. When the installation orientation of the display device 10 is the first orientation as illustrated in FIG. 4A, the sensitivity of the proximity sensor 15a whose detection range is R0 (default value) is reduced to set the detection range to R1 (< R0). When the installation orientation of the display device 10 is the second orientation as illustrated in FIG. 4B, the sensitivity of the proximity sensor 15b whose detection range is R0 (default value) is reduced to set the detection range to R1 (< R0). As a result, regardless of whether the display device 10 is installed in the first orientation or the second orientation, it is possible to prevent detection of the proximity sensor 15a or 15b on the upper side from being blocked by the upper wall 2U and maintain a proper detection of the proximity sensors 15a and 15b.

The operations of the display device 10 and the server 30 will be described in detail below.

### 1-2-1. Operation of Display Device

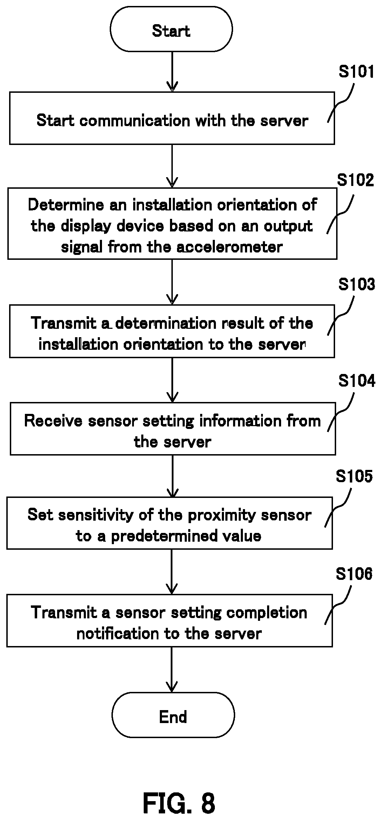

The operation executed mainly by the controller 11 of the display device 10 illustrated in FIG. 6 will be described with reference to FIG. 8.

The display device 10 is installed as illustrated in FIG. 4A or FIG. 4B. When connected to the network 3, the display device 10 starts communication with the server 30 (S101). The display device 10 determines an installation orientation of the display device 10 based on an output signal from the accelerometer 16 (S102). The display device 10 transmits a determination result of the installation orientation, i.e. the first orientation or the second orientation, to the server 30 (S103).

The display device 10 receives, from the server 30, sensor setting information corresponding to the determined installation orientation in which the sensitivity of the proximity sensor 15a or 15b is to be set to a predetermined value (S104). The display device 10 sets the sensitivity of the proximity sensor 15a or 15b to a predetermined value according to the received sensor setting information (S105). As a result, when the display device 10 is installed in the first orientation as illustrated in FIG. 4A, the sensitivity of the proximity sensor 15a is reduced. When the display device 10 is installed in the second direction as illustrated in FIG. 4B, the sensitivity of the proximity sensor 15b is reduced.

The display device 10 transmits a sensor setting completion notification to the server 30 (S106).

### 1-2-2. Operation of Server

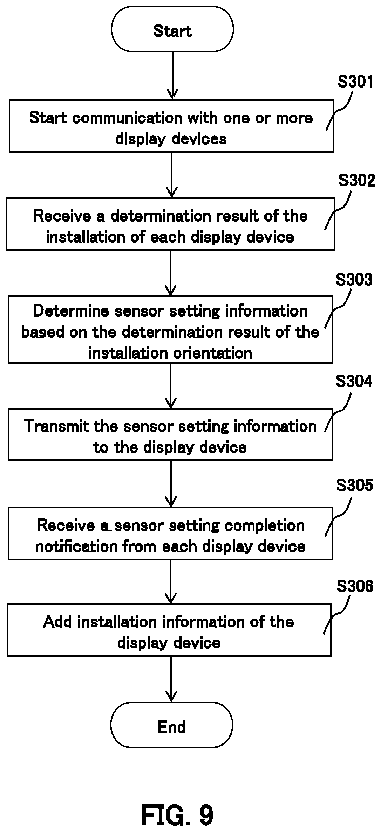

The operation mainly executed by the controller 31 of the server 30 illustrated in FIG. 7 will be described with reference to FIG. 9. The server 30 connects to a plurality of display devices 10 and executes the following processes for each display device 10.

The server 30 starts communication with the display device 10 (S301). The server 30 receives a determination result of the installation orientation from the connected display device 10 (S302). The server 30 refers to the sensor setting information 351 as illustrated in FIG. 10A and determines sensor setting information (S303). Specifically, when the determination result of the installation orientation is the "first orientation" (the orientation as illustrated in FIG. 4A), the server 30 determines to set the sensitivity of the proximity sensor 15a to a predetermined value. When the determination result of the installation orientation is the "second orientation" (the orientation as illustrated in FIG. 4B), the server 30 determines to set the sensitivity of the proximity sensor 15b to a predetermined value. The server 30 transmits the determined sensor setting information to the display device 10 (S304). Upon receiving a sensor setting completion notification from the display device 10 (S305), the server 30 adds installation information for the display device 10 to the display device installation information 352 (S306).

### 1-3. Modified Example

In this embodiment, the display device 10 may be provided with a single proximity sensor 15. For example, in Embodiment 1, the display device 10 may be provided with only the proximity sensor 15a. In this case, when the display device 10 is installed in the first orientation as illustrated in FIG. 4A, the sensitivity of the proximity sensor 15a is reduced. When the display device 10 is installed in the second orientation as illustrated in FIG. 4B, the proximity sensor 15a is not adjusted.

In the present embodiment, adjusting the sensitivity of the proximity sensors 15a or 15b is not the only option to set the detection range of the proximity sensors 15a or 15b. Alternatively, the display device 10 may change a determination threshold value based on which the controller 11 determines proximity. For example, when the detection range of the proximity sensor 15a is to be reduced, the controller 11 can set a determination threshold value for an electric signal from the proximity sensor 15a to be larger than the determination threshold value for the proximity sensor 15b. The determination threshold value is set with respect to the intensity of the signal detected by the proximity sensor 15a, 15b and/or its detection time, etc. As the result of changing the determination threshold value, it becomes less likely to determine that an object is in proximity based on the detection signal from the proximity sensor 15a than the detection signal from the proximity sensor 15b. Therefore, the detection range of the proximity sensor 15a can be substantially reduced.

In the present embodiment, in addition to reducing the sensitivity of the proximity sensor 15a or 15b whose detection range is blocked, the detection range of the proximity sensor 15a or 15b whose detection range is not blocked may be increased. As a result, the detection range of one proximity sensor 15a or 15b whose sensitivity has been reduced can be supplemented by the other proximity sensor 15a or 15b.

### 1-4. Characteristics

The display device 10 sets a detection range of the proximity sensor 15a or 15b according to an installation orientation of the display main body 10a. Therefore, even if the installation orientation of the display main body 10a differs depending on an installation condition for the display device 10, it is possible to maintain a proper detection of the proximity sensors 15a, 15b.

Since the display device 10 can set a detection range of the proximity sensors 15a and 15b to meet a variety of installation conditions, the display device 10 itself is not required to change its design or the like, and therefore cost can be reduced.

### 2. Other Embodiments

As described above, embodiments have been described as examples of the techniques disclosed in the present application.

2-1.
The display device 10 may set the detection range of the proximity sensors 15a or 15b without communication with the server 30. In this case, the display device 10 holds in advance the sensor setting information 351 (FIG. 10A) in the memory 12 or other storage device. The display device 10 determines its installation orientation based on an output signal from the accelerometer 16, refers to the sensor setting information 351, and reduces the sensitivity of the proximity sensor 15a or 15b according to the determined installation orientation.

2-2.
The proximity sensor may be, instead of an infrared proximity sensor, a transmission type photoelectric sensor, a direct reflection type photoelectric sensor, a mirror reflection type photoelectric sensor, a high frequency oscillation type proximity sensor, a capacitance type proximity sensor, a magnetic type proximity sensor, or the like.

The proximity sensors 15 may be disposed on the left and right of the display main body 10a in addition to or instead of being disposed on the top and bottom thereof.

The proximity sensor 15 is not limited to having a detection range in front of the display main body 10a, but may have a detection range covering the other areas around the display device 10. For example, the proximity sensor 15 may be disposed to have a detection range covering an area on the upper, lower, right, and/or left side of the display main body 10a or behind the display main body 10a depending on an installation state of the display device 10.

2-3.
The display device 10 may detect the installation orientation by a gyro sensor instead of the accelerometer 16.

Instead of the accelerometer 16 or such other means, the display device 10 may acquire information indicating an installation state by the following means and set the detection range of the proximity sensor 15 according to the acquired information.

For example, an installation location of the display device 10 may be acquired in advance. The installation location includes a height from a floor surface of the space where the display device 10 is installed to the display device 10 and a distance from the surrounding walls. The detection range of the proximity sensor 15 is then set according to the acquired installation location. In this case, the detection range of the proximity sensor 15 may be set in consideration of installation conditions which have been described above and/or will be described later.

The information indicating the installation location or the installation orientation may be input by a person, or may be determined based on the images acquired from the camera 14 and/or surrounding cameras, which are an example of the state detection unit.

2-4.
The space where the display device 10 is installed can have a variety of installation conditions such as a dent or an overhanging structure of a lower side, a right side, a left side, an upper side, etc. Due to the variation of installation conditions, the proximity sensor 15 that needs to be adjusted also differs. For example, in such a structure that a lower wall protrudes, the sensitivity of the proximity sensor 15b is reduced when the display device is in the installation orientation as illustrated in FIG. 4A, and the sensitivity of the proximity sensor 15a is reduced when the display device is in the installation orientation as illustrated in FIG. 4B. Further, the space may have an installation condition that does not require adjustment of the proximity sensor 15. Therefore, the server 30 or the display device 10 may add information indicating installation conditions to the sensor setting information as illustrated in FIG. 10A to have sensor setting information corresponding to each installation condition. For example, the sensor setting information corresponding to the installation condition "structure with an overhanging upper wall" is as illustrated in FIG. 10A. Opposite to this, the sensor setting information corresponding to the "structure with an overhanging lower wall" is as described above. In the case of installation conditions that do not require adjustment of the proximity sensor 15, the sensor setting information may be set to be all default values.

2-5.
The display device 10 is one example and may be another electronic device.

The display device 10 is not limited to being installed in an aircraft. The display device 10 may be installed in a space inside a vehicle such as a train, a bus, or a ship. Further, the space in which the display device 10 is installed is not limited to that in a vehicle, and may be in a building. The space may be any other space that provides installation conditions.

The controller 11 and controller 31 may be configured by any processor such as a CPU, MPU, GPU, DSP, FPGA, or ASIC. The controller 11 and the controller 31 may be composed of one or a plurality of processors, respectively.

The scope of the present disclosure includes a computer program for causing a computer to execute processes for the display device 10 and the server 30, a method for such processes, and a computer-readable recording medium on which the computer program is recorded. Here, an example of the computer-readable recording media includes a floppy disk, a hard disk, a CD-ROM, an MO, a DVD, a DVD-ROM, a DVD-RAM, a BD (Blu-ray Discs), and a semiconductor memory. The computer program described above is not limited to being recorded on the recording medium described above; the computer program may be acquired via an electric communication line, a wireless or wired communication line, a network typified by the Internet, etc.

In the present disclosure, the system, apparatus or device may include a plurality of components (devices, modules (parts), etc.), and it does not matter whether all the components are in a single housing or not. Therefore, a "device" or "system" may refer to a plurality of devices located in separate housings and connected to each other via a network as well as a single device in which a plurality of modules are disposed in one housing. The server 30 may be composed of software, a platform, or an infrastructure provided by cloud computing.

When a plurality of processes are included in one step, the plurality of processes included in the one step can be executed by one device or shared by a plurality of devices.

### REFERENCE NUMERALS

1: Electronic system
3: Network
10: Display device
10a: Display main body
11: Controller
12: Memory
13: Communication unit
14: Camera
15a: Proximity sensor
15b: Proximity sensor
16: Accelerometer
17: Display unit
18: Touch panel
19: Connection terminal
20: Surface member
30: Server
31: Controller
32: Memory
33: Communication unit
35: Storage unit
150: Screen
351: Sensor setting information
352: Display device installation information

## Claims

1. An electronic device (10) configured to be installed in a given space, the electronic device (10) comprising:
a main body(10a);
one or more sensors (15a, 15b) configured to detect an object around the main body (10a), wherein the one or more sensors are proximity sensors (15a,15b); and
a controller (11) configured to set a detection range of the one or more sensors (15a, 15b) according to a sensor setting information (351), and
a state detection unit (16, 14) configured to detect an installation state of the main body (10a), wherein the installation state of the main body (10a) includes at least an installation orientation of the main body (10a) in the given space,
wherein the sensor setting information (351) includes information for setting the detection range of the one or more sensors (15a, 15b) corresponding to the installation state of the main body (10a) in the given space , **characterized by** in case the detection range is partially blocked due to the installation state of the main body (10a), the detection range is reduced such that the detection range is not blocked.

2. The electronic device (10) according to claim 1, wherein the controller (11) is configured to set the detection range of the one or more sensors (15a, 15b) by adjusting a sensitivity of the one or more sensors (15a, 15b).

3. The electronic device (10) according to claim 1, wherein the controller (11) is configured to set the detection range of the one or more sensors (15a, 15b) by changing a determination threshold value for an electric signal from the one or more sensors (15a, 15b) wherein the controller (11) determines proximity based on the determination threshold value.

4. The electronic device (10) according to any one of claims 1 to 3, wherein the one or more sensors (15a, 15b) include a first sensor (15a) and a second sensor (15b) disposed at different positions, and
wherein the controller (11) is configured to set the detection range of one of the first sensor (15a) or the second sensor (15b) to be different from the other one of the first sensor (15a) or the second sensor (15b) according to the installation state of the main body (10a).

5. The electronic device (10) according to claim 4, wherein the first sensor (15a) and the second sensor (15b) are disposed along a vertical axis in a state where the main body (10a) is installed in the given space.

6. The electronic device (10) according to claim 1, wherein the controller (11) is configured to set the detection range of the one or more sensors (15a, 15b) according to a height in which the electronic device (10) is located in the given space.

7. The electronic device (10) according to any one of claims 1 to 6, comprising a display unit (17) configured to display information, wherein
the one or more sensors (15a, 15b) are configured to detect an object in front of the display unit (17), and
the controller (11) is configured to determine a presence or an absence of an input operation according to an electric signal from the one or more sensors (15a, 15b), the controller (11) being configured to cause the display unit (17) to display the information according to the input operation.

8. An electronic system (1) comprising:
one or more electronic devices (10) according to any one of claims 1 to 7; and
a server configured to connect to the one or more electronic devices (10),
wherein the server (30) is configured to
acquire information indicating the installation state of the main body (10a) of each of the one or more electronic devices (10) in the given space, and
request each of the one or more electronic devices (10) to set the detection range of the one or more sensors (15a, 15b) according to the installation state.

9. The electronic system (1) according to claim 8, wherein
the server (30) includes a storage unit configured to store the sensor setting information (351), and wherein the sensor setting information (351) includes information for setting the detection range of the one or more sensors (15a, 15b) corresponding to the installation state of each of the one or more electronic devices (10).

10. A sensor setting method for an electronic device (10) configured to be installed in a given space, the electronic device (10) including one or more sensors (15a, 15b) configured to detect an object around a main body (10a) of the electronic device (10), wherein the one or more sensors are proximity sensors (15a,15b), the sensor setting method comprising:
setting a detection range of the one or more sensors (15a, 15b) according to a sensor setting information, and
detecting an installation state of the main body (10a) in the given space, wherein the installation state of the main body (10a) includes at least an installation orientation of the main body (10a) in the given space,
wherein the sensor setting information (351) includes information for setting the detection range of the one or more sensors corresponding to the installation state of the main body (10a) in the given space, **characterized by** in case the detection range is partially blocked due to the installation state of the main body (10a), the detection range is reduced such that the detection range is not blocked.

## Patentansprüche

1. Ein elektronisches Gerät (10), das für den Einbau in einen bestimmten Raum ausgelegt ist, wobei das elektronische Gerät (10) umfasst:
einen Hauptkörper (10a);
einen oder mehrere Sensoren (15a, 15b), die so konfiguriert sind, dass sie ein Objekt in der Umgebung des Hauptkörpers (10a) erfassen, wobei der eine oder die mehreren Sensoren Näherungssensoren (15a, 15b) sind; und
eine Steuereinheit (11), die so konfiguriert ist, dass sie einen Erfassungsbereich des einen oder der mehreren Sensoren (15a, 15b) gemäß einer Sensoreinstellungsinformation (351) festlegt, und
eine Zustandserfassungseinheit (16, 14), die so konfiguriert ist, dass sie einen Installationszustand des Hauptkörpers (10a) erfasst, wobei der Installationszustand des Hauptkörpers (10a) mindestens eine Installationsausrichtung des Hauptkörpers (10a) in dem gegebenen Raum umfasst,
wobei die Sensoreinstellungsinformationen (351) Informationen zum Einstellen des Erfassungsbereichs des einen oder der mehreren Sensoren (15a, 15b) entsprechend dem Installationszustand des Hauptkörpers (10a) in dem gegebenen Raum umfassen, **gekennzeichnet dadurch, dass**
falls der Erfassungsbereich aufgrund des Einbauzustands des Hauptkörpers (10a) teilweise blockiert ist, der Erfassungsbereich so verringert wird, dass der Erfassungsbereich nicht blockiert ist.

2. Elektronisches Gerät (10) nach Anspruch 1, wobei die Steuereinheit (11) so konfiguriert ist, dass sie den Erfassungsbereich des einen oder der mehreren Sensoren (15a, 15b) durch Einstellen einer Empfindlichkeit des einen oder der mehreren Sensoren (15a, 15b) einstellt.

3. Elektronisches Gerät (10) nach Anspruch 1, wobei die Steuerung (11) so konfiguriert ist, dass sie den Erfassungsbereich des einen oder der mehreren Sensoren (15a, 15b) durch Ändern eines Bestimmungsschwellenwerts für ein elektrisches Signal von dem einen oder den mehreren Sensoren (15a, 15b) einstellt, wobei die Steuerung (11) die Nähe auf der Grundlage des Bestimmungsschwellenwerts bestimmt.

4. Elektronisches Gerät (10) nach einem der Ansprüche 1 bis 3, wobei der eine oder die mehreren Sensoren (15a, 15b) einen ersten Sensor (15a) und einen zweiten Sensor (15b) umfassen, die an unterschiedlichen Positionen angeordnet sind, und
wobei die Steuereinheit (11) so konfiguriert ist, dass sie den Erfassungsbereich des ersten Sensors (15a) oder des zweiten Sensors (15b) entsprechend dem Einbauzustand des Hauptkörpers (10a) so einstellt, dass er sich von dem des anderen Sensors (15a oder 15b) unterscheidet.

5. Elektronisches Gerät (10) nach Anspruch 4, wobei der erste Sensor (15a) und der zweite Sensor (15b) entlang einer vertikalen Achse in einem Zustand angeordnet sind, in dem der Hauptkörper (10a) in dem gegebenen Raum installiert ist.

6. Elektronisches Gerät (10) nach Anspruch 1, wobei die Steuereinheit (11) so konfiguriert ist, dass sie den Erfassungsbereich des einen oder der mehreren Sensoren (15a, 15b) entsprechend einer Höhe einstellt, in der sich das elektronische Gerät (10) in dem gegebenen Raum befindet.

7. Elektronisches Gerät (10) nach einem der Ansprüche 1 bis 6, umfassend eine Anzeigeeinheit (17), die so konfiguriert ist, dass sie Informationen anzeigt, wobei
der eine oder die mehreren Sensoren (15a, 15b) so konfiguriert sind, dass sie ein Objekt vor der Anzeigeeinheit (17) erfassen, und
die Steuereinheit (11) so konfiguriert ist, dass sie anhand eines elektrischen Signals von dem einen oder den mehreren Sensoren (15a, 15b) das Vorhandensein oder Fehlen einer Eingabevorgang bestimmt, wobei die Steuereinheit (11) so konfiguriert ist, dass sie die Anzeigeeinheit (17) veranlasst, die Informationen entsprechend dem Eingabevorgang anzuzeigen.

8. Ein elektronisches System (1), umfassend:
ein oder mehrere elektronische Geräte (10) gemäß einem der Ansprüche 1 bis 7; und
einen Server, der so konfiguriert ist, dass er eine Verbindung zu dem einen oder den mehreren elektronischen Geräten (10) herstellt,
wobei der Server (30) so konfiguriert ist, dass
Informationen zu erfassen, die den Installationszustand des Hauptkörpers (10a) jedes der einen oder mehreren elektronischen Geräte (10) in dem gegebenen Raum angeben, und
jedes der einen oder mehreren elektronischen Geräte (10) anweisen, den Erfassungsbereich des einen oder der mehreren Sensoren (15a, 15b) entsprechend dem Installationszustand einzustellen.

9. Elektronisches System (1) nach Anspruch 8, wobei
der Server (30) eine Speichereinheit umfasst, die so konfiguriert ist, dass sie die Sensoreinstellungsinformationen (351) speichert, und wobei die Sensoreinstellungsinformationen (351) Informationen zum Einstellen des Erfassungsbereichs des einen oder der mehreren Sensoren (15a, 15b) entsprechend dem Installationszustand jedes der einen oder mehreren elektronischen Geräte (10) umfassen.

10. Ein Verfahren zur Sensoreinstellung für ein elektronisches Gerät (10), das zur Installation in einem bestimmten Raum ausgelegt ist, wobei das elektronische Gerät (10) einen oder mehrere Sensoren (15a, 15b) umfasst, die zur Erfassung eines Objekts in der Umgebung eines Hauptkörpers (10a) des elektronischen Geräts (10) ausgelegt sind, wobei der eine oder die mehreren Sensoren Näherungssensoren (15a, 15b) sind, wobei das Verfahren zur Sensoreinstellung umfasst:
Einstellung eines Erfassungsbereichs des einen oder der mehreren Sensoren (15a, 15b) gemäß einer Sensoreinstellungsinformation, und
Erfassen eines Installationszustands des Hauptkörpers (10a) in dem gegebenen Raum, wobei der Installationszustand des Hauptkörpers (10a) mindestens eine Installationsausrichtung des Hauptkörpers (10a) in dem gegebenen Raum umfasst,
wobei die Sensoreinstellungsinformationen (351) Informationen zum Einstellen des Erfassungsbereichs des einen oder der mehreren Sensoren entsprechend dem Installationszustand des Hauptkörpers (10a) in dem gegebenen Raum umfassen, **gekennzeichnet durch**
falls der Erfassungsbereich aufgrund des Installationszustands des Hauptkörpers (10a) teilweise blockiert ist, der Erfassungsbereich so verringert wird, dass der Erfassungsbereich nicht blockiert ist.

## Revendications

1. Dispositif électronique (10) conçu pour être installé dans un espace donné, le dispositif électronique (10) comprenant :
un corps principal (10a) ;
un ou plusieurs capteurs (15a, 15b) configurés pour détecter un objet autour du corps principal (10a), dans lequel le ou les capteurs sont des capteurs de proximité (15a, 15b) ; et
un contrôleur (11) configuré pour définir une portée de détection du ou des capteurs (15a, 15b) en fonction d'informations de réglage de capteur (351), et
une unité de détection d'état (16, 14) configurée pour détecter un état d'installation du corps principal (10a), dans lequel l'état d'installation du corps principal (10a) comprend au moins une orientation d'installation du corps principal (10a) dans l'espace donné,
dans lequel les informations de réglage des capteurs (351) comprennent des informations permettant de régler la portée de détection du ou des capteurs (15a, 15b) en fonction de l'état d'installation du corps principal (10a) dans l'espace donné, **caractérisé en ce que**
dans le cas où la portée de détection est partiellement bloquée en raison de l'état d'installation du corps principal (10a), la portée de détection est réduite de telle sorte que la portée de détection ne soit pas bloquée.

2. Dispositif électronique (10) selon la revendication 1, dans lequel le contrôleur (11) est configuré pour régler la portée de détection du ou des capteurs (15a, 15b) en ajustant la sensibilité du ou des capteurs (15a, 15b).

3. Dispositif électronique (10) selon la revendication 1, dans lequel le contrôleur (11) est configuré pour régler la portée de détection du ou des capteurs (15a, 15b) en modifiant une valeur seuil de détermination pour un signal électrique provenant du ou des capteurs (15a, 15b), le contrôleur (11) déterminant la proximité sur la base de la valeur seuil de détermination.

4. Dispositif électronique (10) selon l'une quelconque des revendications 1 à 3,
dans lequel le ou les capteurs (15a, 15b) comprennent un premier capteur (15a) et un deuxième capteur (15b) disposés à des positions différentes, et
dans lequel le contrôleur (11) est configuré pour régler la portée de détection de l'un parmi le premier capteur (15a) ou le deuxième capteur (15b) de manière à ce qu'elle soit différente de celle de l'autre parmi le premier capteur (15a) ou le deuxième capteur (15b) en fonction de l'état d'installation du corps principal (10a).

5. Dispositif électronique (10) selon la revendication 4, dans lequel le premier capteur (15a) et le deuxième capteur (15b) sont disposés le long d'un axe vertical dans un état où le corps principal (10a) est installé dans l'espace donné.

6. Dispositif électronique (10) selon la revendication 1, dans lequel le contrôleur (11) est configuré pour régler la portée de détection du ou des capteurs (15a, 15b) en fonction de la hauteur à laquelle le dispositif électronique (10) est situé dans l'espace donné.

7. Dispositif électronique (10) selon l'une quelconque des revendications 1 à 6, comprenant une unité d'affichage (17) configurée pour afficher des informations,
dans lequel
le ou les capteurs (15a, 15b) sont configurés pour détecter un objet situé devant l'unité d'affichage (17), et
le contrôleur (11) est configuré pour déterminer la présence ou l'absence d'une opération d'entrée en fonction d'un signal électrique provenant du ou des capteurs (15a, 15b), le contrôleur (11) étant configuré pour amener l'unité d'affichage (17) à afficher les informations en fonction de l'opération d'entrée.

8. Système électronique (1) comprenant :
un ou plusieurs dispositifs électroniques (10) selon l'une quelconque des revendications 1 à 7 ; et
un serveur configuré pour se connecter au ou aux dispositifs électroniques (10),
dans lequel le serveur (30) est configuré pour
acquérir des informations indiquant l'état d'installation du corps principal (1 Oa) de chacun desdits un ou plusieurs dispositifs électroniques (10) dans l'espace donné, et
demander à chacun des un ou plusieurs appareils électroniques (10) de régler la portée de détection du ou des capteurs (15a, 15b) en fonction de l'état d'installation.

9. Système électronique (1) selon la revendication 8, dans lequel
le serveur (30) comprend une unité de stockage configurée pour stocker les informations de réglage des capteurs (351), et dans lequel les informations de réglage des capteurs (351) comprennent des informations permettant de régler la portée de détection du ou des capteurs (15a, 15b) en fonction de l'état d'installation de chacun des dispositifs électroniques (10).

10. Procédé de réglage de capteurs pour un dispositif électronique (10) configuré pour être installé dans un espace donné, le dispositif électronique (10) comprenant un ou plusieurs capteurs (15a, 15b) configurés pour détecter un objet autour d'un corps principal (10a) du dispositif électronique (10), dans lequel le ou les capteurs sont des capteurs de proximité (15a, 15b), le procédé de réglage de capteurs comprenant :
le réglage d'une plage de détection du ou des capteurs (15a, 15b) en fonction d'informations de réglage de capteur, et
la détection d'un état d'installation du corps principal (10a) dans l'espace donné, dans lequel l'état d'installation du corps principal (10a) comprend au moins une orientation d'installation du corps principal (10a) dans l'espace donné,
dans lequel les informations de réglage des capteurs (351) comprennent des informations permettant de régler la portée de détection du ou des capteurs en fonction de l'état d'installation du corps principal (10a) dans l'espace donné,
**caractérisé en ce que**
dans le cas où la portée de détection est partiellement bloquée en raison de l'état d'installation du corps principal (10a), la portée de détection est réduite de telle sorte que la portée de détection ne soit pas bloquée.
